# EUROPEAN PATENT APPLICATION

(11) **EP 0 826 872 A2**
(43) Date of publication of application: **04.03.1998**
(21) Application number: 97114788.9
(22) Date of filing: 26.08.1997
(51) Int. Cl.: F02M 3/00, F02M 37/20, F02M 51/00, F02M 63/06, F16N 13/00, B41J 2/02, F04F 7/00

(54) **Liquid injection device**

(30) Priority: 26.08.1996 JP 223359/96; 28.08.1996 JP 226564/96
(71) Applicant: YAMAHA HATSUDOKI KABUSHIKI KAISHA, Iwata-shi Shizuoka-ken, 438 (JP)
(72) Inventor: Otome, Kimitake, Iwata, Shizuoka 438 (JP)
(74) Representative: Grünecker, Kinkeldey, Stockmair & Schwanhäusser Anwaltssozietät

(57) **Abstract**

The invention relates to a liquid injection device comprising a high pressure generating device and an associated injector. Further, there is provided an air bleed port for removing gaseous fluid present in said liquid to be injected.

## Description

This invention relates to a liquid injection device comprising a high pressure generating device and an associated injector.

For the purpose of this specification, gases generated or mixed in the liquid such as bubbles of liquid vapor or air are genetically referred to as "air".

A fuel feed pump for feeding fuel to a combustion chamber of an internal combustion engine is disclosed in Japanese Unexamined Patent Publication Hei 8-82266. The fuel feed pump disclosed in the patent publication is composed of a positive displacement pump incorporating a piezoelectric element, which is arranged such that in a cylinder is provided a piston driven by a piezoelectric element (PZT actuator), the inside space of the cylinder on the piston head side acts as a pressure chamber, and a fuel induction port and a fuel delivery port are open at the cylinder end on the piston skirt side, both ports being provided with check valves.

In such an arrangement, voltage application to the piezoelectric element causes its volume to change, which drives the piston toward the pressure chamber and changes the volume of the pressure chamber to thereby increase the fuel pressure in the pressure chamber, causing fuel to be pushed out of the delivery port. Thus, fuel pressure in the pressure chamber is increased according to the steady-state volume change of the piezoelectric element in response to the piston movement, or voltage, and the pressurized fuel is pushed out through the check valve of the delivery port to be supplied to the high pressure injector through a fuel pipe.

According to the system disclosed the above-described patent publication, the drive signal for the injector is controlled by taking account of the time lag from the time the drive signal was inputted to the piezoelectric element to the time the piezoelectric element changes in its volume and a required pressure has been reached, so that the injector is controlled in accurate response to pressure rise due to the steady-state volume change of the piezoelectric element.

However, in the fuel injection apparatus disclosed in the foregoing patent publication, no means are provided in the pressure chamber and the fule passage downstream therefrom to reduce or eliminate air from the fuel. Therefore, when air is mixed in the fuel route, or air dissolved in the fuel or the fuel itself is vaporized as a result of pressure fall, if air or vapor bubbles have reached the pressure chamber or the fuel passage downstream therefrom, pressurization due to the piston movement in the pressure chamber will cause the air to be compressed, preventing a significant increase in fuel pressure, until the air or vapor bubbles are discharged from the injection hole, together with fuel.

If the piezoelectric element is activated in a very short time, it is possible for an impulsive high pressure wave to be generated in the pressure chamber. A liquid injection apparatus can be considered in which this impulsive high pressure wave is inducted to the injection hole to inject liquid at high pressure. Also in this case, when air or vapor bubbles are present in the pressure chamber, the impuslive high pressure wave is dispersed or attenuated by the air or vapor bubbles, preventing the induction of the impulsive high pressure wave to the delivery port. When air or vapor bubbles are present in the fuel passage downstream from the pressure chamber, the air or vapor bubbles reflect or attenuate the impulsive high pressure wave, posing a problem of the pressure wave being prevented from being propagated to the injection hole.

Accordingly, it is an objective of the present invention to provide a liquid injection device as indicated above which is capable to discharge air or vapor bubbles which may be present in said device.

According to the present invention, this objective is solved for a liquid injection device as indicated above by an air bleed port for removing gaseous fluid present in said liquid to be injected.

According to a preferred embodiment of the present invention said high pressure generating device comprising a pressure chamber in fluid communication with a liquid supply source, a low pressure pump between said liquid supply source and said pressure chamber and an impulsive high pressure generating source acting on liquid present in said pressure chamber by providing an impulsive pressure to said liquid.

For adaption to different purposes it is advantageous when said high pressure generating device is directly connected to said injector, via an injection passage, or via a liquid pipe.

According to another preferred embodiment of the present invention said air bleed port is provided in said high pressure generating device, in a liquid pipe between said high pressure generating device and said injector, or in said injector.

In such an arrangement, during the entire time the high pressure pump is not operated and the valve means is closed, fuel is supplied to the pressure chamber by the low pressure pump and circulates from an air bleed port provided in the pressure chamber, injection passage, or valve means to the carburetor liquid separating means. Even if air is mixed or bubbles are generated in the pressure chamber, the air together with fuel circulating from the air bleed port, is sent to the carburetor liquid separating means, where the air is separated from the fuel.

A preferred embodiment of the present invention may comprise a liquid injection apparatus having a pressure chamber in communication with a liquid supply source, an injection hole through which said liquid is injected, an injection passage for inducting liquid from said pressure chamber to said injection hole, a high pressure pump for pressurizing fuel in said pressure chamber, and valve means provided near said injection hole and adapted to be opened in response to the operation of said high pressure pump, wherein said liquid supply source is gas-liquid separating means with a function of gas-liquid separation, or gas-liquid separating means is provided in the liquid supply route between said liquid supply source and pressure chamber, said gas-liquid separating means being disposed above said pressure chamber, while an air bleed port is provided in said pressure chamber, injection passage, or valve means, said air bleed port and said gas-liquid separating means, or a liquid supply passage on the upstream side thereof being brought into communication with each other by an air bleed passage.

In the arrangement described above, during stoppage of the high pressure pump, air or vapor bubbles in the pressure chamber, injection passage, or valve means downstream from the air bleed port, flow from the air bleed port to the carburetor liquid separating means or the upstream side therefrom because of their buoyancy, so that they can be discharged. Further, another preferable embodiment is characterized by a liquid injection apparatus, wherein in the middle of said air bleed passage is disposed a check valve through which only the flow to said gas-liquid separating means or said liquid supply route on the upstream side thereof is permitted.

In this arrangement, during stoppage of the high pressure pump, not only air or vapor bubbles in the pressure chamber, injection passage, or valve means downstream from the air bleed port, can be discharged, but air or vapor bubbles in the fuel supply route between the air-liquid separating means and the pressure chamber can be inducted to the air bleed passage through the pressure chamber to be discharged.

Still another preferred embodiment of the present invention may comprise a liquid injection apparatus wherein said valve means is composed of a check valve and arranged so as to be opened when a residual value after the pressure on the downstream side with respect to said check valve is subtracted from the pressure on the upstream side, is greater than a predetermined value which is larger than the difference between the delivery pressure of said low pressure pump and the minimum pressure on the downstream side.

In this arrangement, with valve means of a simple structure, air bleed can be performed through the low pressure pump during stoppage of the high pressure pump or the time the high pressure pump is in operation but not activated.

Still another preferred embodiment of the present invention may have a liquid injection apparatus, wherein said valve means is composed of a check valve and arranged so as to be opened when a residual value after the pressure on the downstream side with respect to said check valve is subtracted from the fluid pressure on the upstream side, is greater than a predetermined value which is larger than the difference between the pressure caused by the height difference of said gas-liquid separating means from said check valve, and the minimum pressure on the downstream side.

In this arrangement, with valve means of a simple structure, air bleed can be performed through the low pressure pump during stoppage or operation of the high pressure pump.

Yet another preferred embodiment of the present invention can comprise a liquid injection apparatus, wherein said valve means is provided with valve opening/closing drive means adapted to open said valve in response to operation of said high pressure pump.

In this arrangement, in addition to effecting air bleed, liquid can be injected reliably in response to operation of the high pressure pump.

Yet another preferred embodiment may be provided with a liquid injection apparatus, wherein said high pressure pump is composed of impulsive high pressure means for providing an impulsive pressure to the liquid in said pressure chamber.

In this arrangement, in addition to effecting air bleed, liquid can be injected through impuslive high pressure, increasing injection speed.

Yet another preferred embodiment may comprise a liquid injection apparatus, wherein an impulsive high pressure generating section in said impulsive high pressure means is formed of an electrostrictive element capable of changing its shape in response to changes in intensity of the electric field.

In this arrangement, the electrostrictive element changes its shape the instant a drive current is inputted, and moves toward the liquid. At this instant, liquid particles tend to stay in the place by their inertia, so that in addition to effecting air bleed, an impuslive high pressure can be generated reliably.

Yet another preferred embodiment of the present invention may have a liquid injection apparatus, wherein an impulsive high pressure generating section in said impulsive high pressure means is formed of an magnetostrictive element capable of changing its shape in response, to changes in intensity of the magnetic field.

In this arrangement, the magnetostrictive element changes its shape the instant a drive current is inputted to change the magnetic field of the electromagnetic coil, and moves toward the liquid. At this instant, liquid particles tend to stay in the place by their inertia, so that in addition to effecting air bleed, an impuslive high pressure can be generated reliably.

A preferred embodiment of the present invention can have a liquid injection apparatus which is employed as ink injection means of a printing device for supplying and injecting ink to articles to be printed.

In this case where the apparatus is employed as ink injection means of a printing device, ink injection makes use of impuslive high pressure, so that injection speed can be increased, as well as printing speed. Further, valve means is provided near the injection hole, so that ink supply can be controlled properly, preventing blurred printing. Furthermore, if a surface to be printed is placed at a large distance from the injection hole, atomization of the ink particles is accelerated because of high injection speed, effecting even printing in wide areas. In addition, if an article to be printed is moved perpendicular to the direction of injection while controlling the distance between the injection hole and the surface to be printed, printing process can be performed without unevenness or the blur.

Another preferred embodiment may be provided with a liquid injection apparatus which is employed as fuel injection means for supplying fuel to a combustion chamber of a boiler.

In such fuel injection means of a boiler, fuel is injected through impulsive high pressure, so that fuel injection speed is increased, effecting sufficient fuel atomization. Therefore, even a fuel of low volatility such as a heavy oil can be burned reliably, effecting a higher thermal efficiency with a smaller amount of soot.

Another preferred embodiment of the present invention may comprise a liquid injection apparatus which is employed as lubricating oil feeding means of an internal combustion engine for feeding and injecting lubricating oil to the same.

In this case where the apparatus is employed as lubricating oil feeding means of an internal combustion engine, lubricating oil is injected through impulsive high pressure, so that stable and reliable lubricating can be performed, effecting smooth engine operation.

Another preferred embodiment of the present invention may have a liquid injection apparatus which is employed as a fuel injection apparatus of an internal combustion engine for directly injecting fuel into an intake system or a combustion chamber of the internal combustion engine.

In this case where the apparatus is employed as a fuel injection apparatus in an internal combustion engine, fuel is injected through impulsive high pressure, so that it can be injected even when the combustion chamber is at a high pressure. Therefore, fuel can be injected for a gasoline engine till the time just before ignition at the end of the compression stroke, and for a diesel engine, fuel can be injected into the combustion chamber at a high pressure during combustion. In this case, fuel injection speed is increased, so that fuel particles are atomized so as to be vaporized reliably, thereby preventing the unburnt component from generating and improving purification of the exhaust gas.

Another preferred embodiment can comprise a fuel injection type internal combustion engine carrying a liquid injection apparatus according to the invention.

In such an internal combustion engine, fuel is injected through impulsive high pressure, so that fuel injection speed is increased and atomization of fuel particles is accelerated, effecting reliable fuel supply to the combustion chamber at a high pressure. Therefore, a reliable and general purpose fuel injection apparatus can be achieved which is available not only for an intake pipe injection or in-cylinder injection in two-stroke and four-stroke gasoline engines, but also for diesel engines, and in which reliable fuel injection can be effected in all the operating conditions with high combustion efficiency, and generation of unburnt gas is restricted, thereby enhancing the quality of exhaust emissions.

Other preferred embodiments of the present invention are laid down in further dependent claims.

In the following, the present invention is explained in greater detail subject to several embodiments thereof in conjunction with the accompanying drawings, wherein:
Fig. 1 is a structural view of a four-stroke engine embodying this invention.
Fig. 2 is a structural view of an embodiment of a liquid injection apparatus according to this invention.
Fig. 3 is a structural view of another embodiment of a liquid injection apparatus according to this invention.
Figs. 4 are illustrations of examples of the location of the air bleed port of an embodiment.
Fig. 5 is a structural view of an injector according to this invention.
Figs. 6 are structural views of another injector according to this invention.
Fig. 7 is a detailed structural view of a high pressure generating source according to this invention.
Fig. 8 is a structural view of another high pressure generating source according to this invention.
Figs. 9 are structural illustrations of yet another high pressure generating source according to this invention.
Figs. 10 are structural illustrations of still another high pressure generating source according to this invention.
Fig. 11 is a diagram showing the relation between the impulsive high pressure wave and its drive signal according to this invention.
Fig. 12 is a structural view of a two-stroke engine embodying this invention.
Fig. 13 is a structural view of an injection valve integrated type fuel injection apparatus according to this invention.
Fig. 14 is a structural view of another embodiment of the integrated type fuel infection apparatus.
Fig. 15 is a structural view of yet another embodiment of the integrated type fuel injection apparatus.
Fig. 16 is a structural view of still another embodiment of the integrated type fuel injection apparatus.
Fig. 17 is a structural view of another embodiment of this invention.

Although the present invention is applicable for various kinds of injection devices, for example ink injection devices, lubricant injection devices and others, the present invention will be explained by example of a fuel injection device.

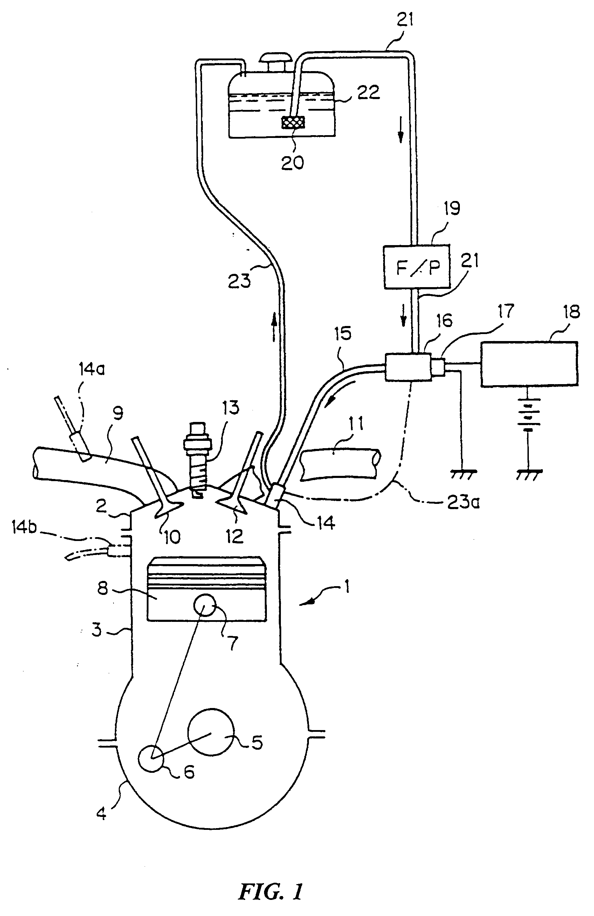

Fig. 1 is a structural view of a four-stroke internal combustion engine incorporating a liquid injection apparatus according to this invention. An engine 1 is composed of a cylinder head 2 constituting the upper section of a combustion chamber, a cylinder block 3 constituting a cylinder of the combustion chamber, and an oil pan 4 forming a crank chamber. A crank shaft 5 in the crank chamber is connected to a piston 8 through a crank pin 6 and a piston pin 7. The cylinder head 2 is provided with an intake pipe 9, at the end of which is fitted an intake valve 10 facing the combustion chamber of the engine. The cylinder head 2 is also provided an exhaust pipe 11, at the end of which is fitted an exhaust valve 12. At the center of the cylinder head 2 is fitted an ignition plug 13.

In this embodiment, at the top of the cylinder head 2 is provided an injector 14, facing the combustion chamber, for directly injecting fuel into the combustion chamber of the engine. This injector 14 is in communication, through a fuel pipe 15, with a high pressure generating device 16 as a high pressure pump according to this invention. The high pressure generating device 16 is provided with an impuslive high pressure generating source 17 composed of electrostrictive means (piezoelectric element as described later). The high pressure generating source 17 is connected to a control circuit 18 and controlled for driving in a predetermined timing. Into the high pressure generating device 16 is inducted fuel from a fuel tank 22 by a fuel pump 19 through a fuel feed pipe 21. Numeral 20 represents a filter. An air bleed pipe 23 is connected to the injector 14, to which is supplied fuel at all times by the fuel pump 19 acting as a low pressure pump, and bubbles of air, vaporized fuel etc in the fuel pipe 15 and the injector are returned, together with fuel, upwardly to the fuel tank with an air bleed hole (not shown) at the top. The bubbles are separated in the fuel tank 22 so as not to flow back to the fuel feed pipe 21. In this way, the fuel pipe 15 and the injector 14 are filled with fuel, so that an impulsive high pressure wave will be propagated reliably and collide with the inside wall of the injector 14 just behind the injection hole, allowing further pressure rise.

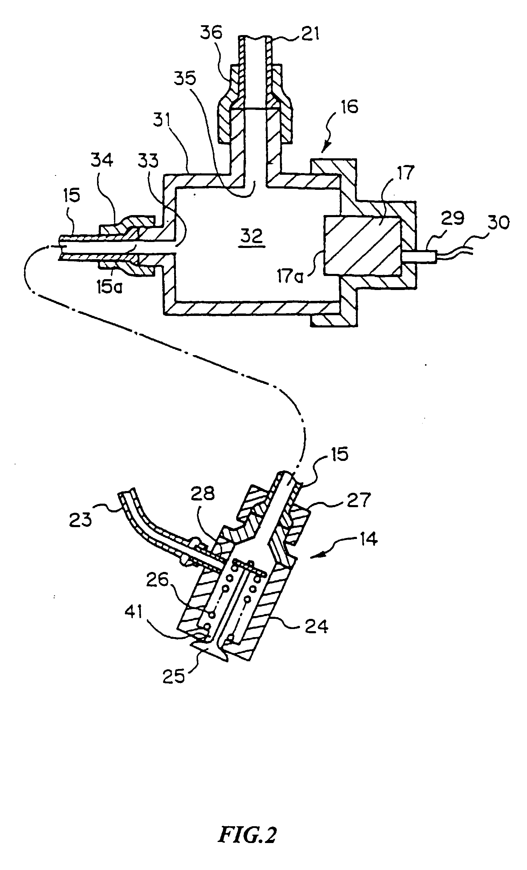

Fig. 2 is a detailed structural view of the high pressure generating device 16 and the injector 14 of the foregoing embodiment. The injector 14 is composed of a valve body 24 with an injection hole 41 at the front, and a valve 25 is fitted in this injection hole 41. The valve 25 is biased toward valve closing by a spring 26. To the injector 14 is connected the fuel pipe 15 through a cap nut 27. The valve body 24 is formed, in the side wall, with an air bleed port 28, to which is connected the air bleed pipe 23. The air bleed port 28 is disposed in the side surface parallel to a moving direction of the impulsive high pressure wave, rather than the place against the pressure wave, so that the energy of the impulsive high pressure wave is prevented from dispersing at the air bleed port 28, ensuring propagation of the high pressure wave toward the injection hole. The air bleed port 28 is formed in the valve body 24, from which bubbles in the wide areas of the fuel route up to a compression chamber 32, can be discharged from the port.

When the impulsive high pressure wave is propagated to the injector 14 as described later, it collides with the inside surface of the valve 25, effecting further pressure rise. The energy causes the valve 25 to be opened against the bias of a spring 26, and fuel to be injected. That is, when the pressure difference between the combustion chamber to receive fuel injection and the valve body 24 is smaller than a value predetermined by the spring 26, the valve 25 is held closed. On the other hand, when the impulsive high pressure wave reaches the valve body and the pressure difference between the inside and the outside of the valve becomes larger than a predetermined value, then the valve 25 is opened and fuel is injected. The spring 26 acts against the delivery pressure of the fuel pump 19, so that bubbles can be discharged toward the air bleed pipe 23 during operation of the fuel pump 19.

The high pressure generating device 16 is composed, for example, of a cylindrical body 31, inside which is formed the pressure chamber 32. In one end of of the pressure chamber 32 is fitted the high pressure generating source 17 composed, for example, of a piezoelectric element (described later). The high pressure generating source 17 is adapted to generate an impulsive high pressure wave in the pressure chamber 32 so as to apply a impulsive pressure to fuel in the pressure chamber 32. At one end of the cylinder body 31 on the side opposite to a surface 17a from which the impulsive high pressure wave is applied to the fuel in the pressure chamber, is open a high pressure wave delivery port 33 into the pressure chamber 32. To the delivery port 33 is connected, through a cap nut 34, the fuel pipe 15 in communication with the injector 14. A injection passage 15a is composed of an inside passage of the fuel pipe 15 and the delivery port 33 at the end thereof. The high pressure generating source 17 is connected, through a seal member 29, to the control circuit 18 (Fig. 1), by a lead wire 30. At the side of the cylindrical body 31 perpendicular to the impulsive high pressure wave applying surface 17a of the high pressure generating source 17, that is, the side perpendicular to the moving direction of the high pressure wave, is open a fuel induction port 35 into the pressure chamber 32. To the fuel induction port 35 is connected, through a cap nut 36, the fuel feed pipe 21 in communication with the fuel pump 19 (Fig. 1).
[0040]

In the fuel injection apparatus as described above, when a drive voltage is applied to the piezoelectric element (not shown) of the high pressure generating source 17 with fuel filled in the pressure chamber 32, an impulsive high pressure wave is generated the instant the piezoelectric element changes its shape.

Generation of the high pressure wave and its functions are as follows.

First, the piezoelectric element changes its shape the instant a voltage is applied, and the high pressure wave applying surface 17a moves toward the pressure chamber. Although the instantaneous movement pushes liquid (fuel) particles in the pressure chamber, they tend to keep their position in the state of rest, so that an impulsive high pressure is generated on the fuel in the pressure chamber 31. Therefore, the impulsive high pressure wave is propagated instantaneously from the high pressure wave applying surface 17a, in the direction perpendicular to the applying surface 17a, toward the high pressure wave delivery port 33 opposite to the applying surface. Although the pressure wave passes the fuel induction port 35 open at the side of the pressure chamber 32 during propagation, pressure of the high pressure wave does not have any substantial influence on the fuel in the fuel induction port 35 and the fuel feed pipe 21 connected thereto because of the direction of the opening of the port 35 being perpendicular to the moving direction of the high pressure wave, and thus high pressure wave energy is never consumed. Therefore, no cutoff means such as a check valve is necessary in the fuel induction port 35. Unless the fuel induction port 35 is disposed in front of the high pressure wave applying surface 17a, it may be located so as to face the pressure chamber 32, in parallel to the high pressure generating source 17.

The impulsive high pressure wave which has reached the opposite end surface of the cylindrical body 31 from the high pressure wave applying surface 17a of the high pressure generating source 17, enters into the fuel delivery port 33 formed exclusively in this surface, and is propagated toward the injector 14 through the fuel in the injection passage 15a. In this time, no cutoff member such as a check valve is provided in the fuel delivery port 33, so that the high pressure wave enters into the injection passage 15a without energy consumption.

The impulsive high pressure wave which has reached the injector 14, as described above, causes the valve to be opened against the bias of the spring 26, and high pressure fuel to be injected from the injection hole 41. In this embodiment, the injector 14, as shown in the figure, is located at the top of the cylinder head, for direct injection to the cylinder, but instead, it may be provided in the middle of the intake pipe 9, as the injector 14a shown in a single dot and dash line, or may be disposed in the side wall of the cylinder block 3, for direct injection to the cylinder, as the injector 14b also shown in a single dot and dash line. In the foregoing embodiment, the air bleed pipe 23 connects the injector 14, and the fuel tank 22 or gas-liquid separating means, but instead, it may be disposed, as shown in a single dot and dash line in Fig. 1, so as to connect the injector 14 and the high pressure generating device 16. Thus, air and fuel vapor in the fuel pipe 15 and the injector 14 are discharged into the combustion chamber during fuel injection. Even after the air discharge through several times of injections, fuel vapor generated by heat transmission from the combustion chamber, in addition to being discharged into the combustion chamber, can be returned, for condensation, to the pressure chamber 32, remote from the combustion chamber and thus at a low temperature, through residual pressure still remaining in the injector 14 after closing of the valve 25.

In the embodiment shown in Fig. 1 or 2, a high pressure pump may be employed in which a piston is arranged so as to be moved in and out of the pressure chamber 32. In this case, a check valve which allows only the flow from the fuel pump 19 toward the pressure chamber 32, is disposed in the fuel induction port 35, and an orifice is provided in the air bleed port 28 (provided in the pressure chamber as in Fig. 1 or in the valve body 24 as in Fig. 2) or in the middle of the air bleed passage. When a piston is inserted in the pressure chamber 32, the fuel displaced by the piston opens the valve 25 of an outwardly opening type to be injected from the injection hole 41, and flows also to the air bleed passage 23. At this time, resistance in the injection hole 41 and the orifice causes the pressure or the fuel in the pressure chamber 32 and the fuel pipe 15 to rise, generating high pressure. When the piston is retracted from the pressure chamber 32, the outwardly opening valve 25 is closed, and the pressure chamber 32 is reduced to be at a negative pressure due to resistance in the orifice, so that the check valve is opened and fuel is supplied from the fuel pump 19 to the pressure chamber 32.

Even in this arrangement, as a result of the action of the fuel pump 19 during stoppage of the engine 1, fuel and bubbles are circulated to the fuel tank 22 through the orifice, and when the piston is pushed in during operation of the high pressure pump, they flow to the fuel tank 22 through the orifice. That is, an air bleed function can be performed during stoppage as well as operation of the engine 1. A check valve which allows only the flow toward the fuel tank 22, may be disposed instead of the orifice in the air bleed port 28 or the middle of the air bleed passage 23. A smaller opening degree of the check valve will increase the fuel pressure in the pressure chamber 32, preventing back flow in the air bleed passage 23.

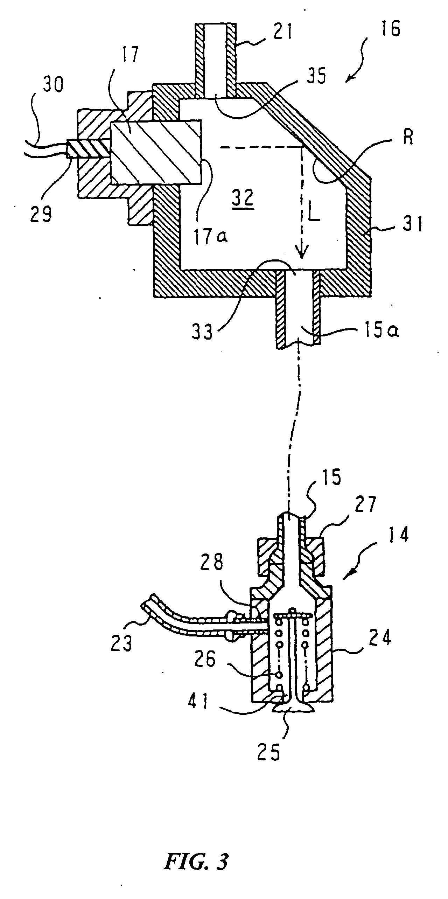

Fig. 3 is a structural view of another embodiment of this invention. In this embodiment, a reflection surface R is formed in the inside surface of the pressure chamber 32, and the high pressure wave from the high pressure generating source 17 is reflected by the reflection surface R, changed its direction, and inducted to the delivery port 33. Therefore, the route of the high pressure wave, as shown by a letter L in the figure, will be a broken line-like route bent at the reflection surface. The broken line-like route varies depending on the angle, position, or the number of the reflection surface R, and a desired layout can be achieved by changing the relative positioning between the high pressure generating source 17 and the delivery port 33. Other structures and functions including those of the injector 14, are similar to the foregoing embodiment in Fig. 2.

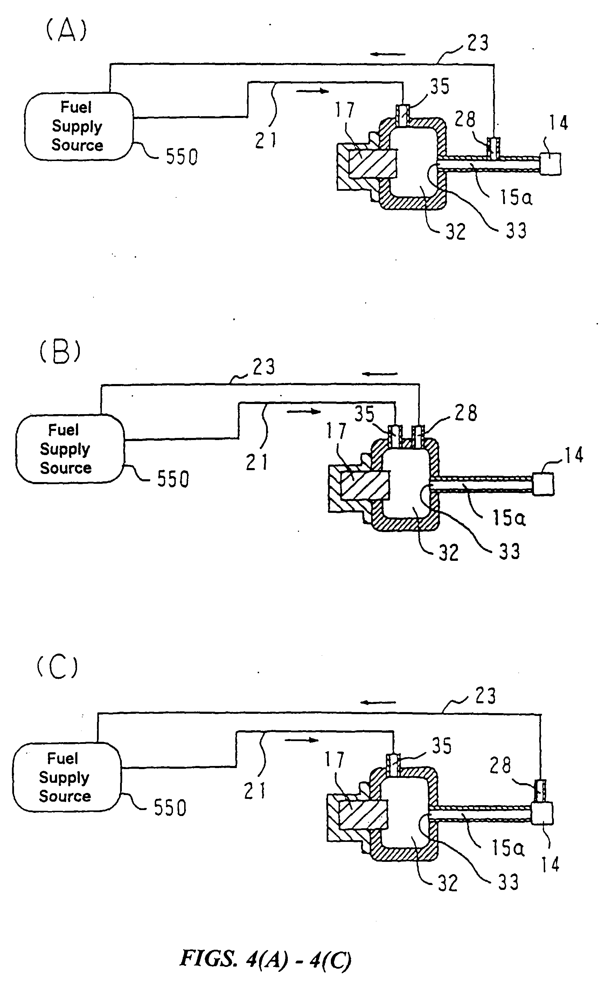

Figs. 4(A), (B), (C) are basic structural views of other embodiments of this invention, respectively. In respective embodiments, fuel is supplied from liquid supply sources 550 to the pressure chambers 32 through the fuel pipes 21 and the fuel induction ports 35. The liquid supply source 550 includes a liquid tank, a pump for sending the liquid, and a filter, and provided with gas-liquid separating means including an air bleed for removing bubbles etc. If the liquid supply source 550 is composed of a fuel tank with an air bleed, and a fuel pump, the fuel tank constitutes the gas-liquid separating means. The air bleed pipe 23 is connected to the upper part of the fuel tank, and bubbles mixed in the fuel sent back in the air bleed pipe 23 are separated in the fuel tank. Alternately, the fuel supply source 550 includes a float chamber provided in the fuel supply pipe connecting the fuel tank and the fuel pump. The float chamber is arranged such that a float and a needle valve fitted thereto are provided, and when fuel is decreased, the float goes down to open the needle valve for fuel induction so that the liquid of the float chamber may be kept at a constant level. The float chamber is provided with an air bleed hole to release vapor or air. The liquid supply source, if including such a float chamber, constitutes gas-liquid separating means.

In this case, the air bleed pipe 23 is connected to the upper part of the float chamber, or to the fuel feed pipe between the fuel tank and the float chamber. Thus, air mixed in the fuel sent back in the air bleed pipe 23 is separated in the float chamber, and only the fuel flows from the float chamber to the fuel pump.

To the pressure chamber 32, as in the foregoing embodiment, is connected an injector 14 through the delivery port 33 and the injection passage 15a. In this case, the injector 14, as described above, may be of a separating type connected through the fuel pipe, or as described later, of a integrated type in one unit provided integrally with valve means similar to the injector on the high pressure generating device side.

In Figs. 4, Fig. (A) is an arrangement in which the air bleed port 28 is provided in the middle of the injection passage 15a between the pressure chamber 32 and the injector 14, or valve means, and the air bleed pipe 23 connected to the air bleed port 28 is brought into communication with the gas-liquid separating means of the liquid supply source 550. Fig. (B) is another arrangement in which the air bleed port 28 is provided in the upper part of the pressure chamber 32, and brought into communication with the gas-liquid separating means. Fig. (C) is still another arrangement in which the air bleed port 28 is provided in the injector 14, or valve means, and brought into communication with the gas-liquid separating means.

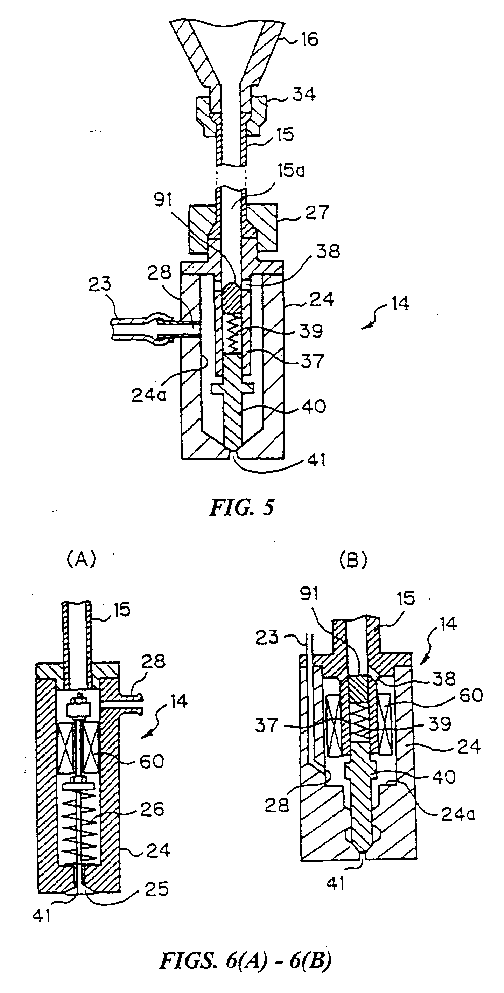

Fig. 5 shows another structural example of the injector of this invention. While the injector shown in Fig. 2 and Fig. 3 is of an outwardly opening valve type, with the injector opening outwardly, the injector exemplified in this figure is of an inwardly opening valve type, with a valve opening inwardly. A valve 40 is disposed, for sliding movement in a guide sleeve 37, inside a injection hole 41 formed at the front of the valve body 24. The valve 40 is biased by a spring 39 toward the injection hole 41 in a state of valve closing. At the base section of the guide sleeve 37 is open a communication hole 38, which provides communication between a fuel injection passage 15a in the fuel pipe 15 and a combustion passage 24a in the valve body 24. The spring 39 is disposed in the guide sleeve 38, and fitted in a sealed space into which ingress of fuel is prevented by means of an upper seal member 91 fixed to the sleeve 37 and a seal ring (not shown) at the lower end. Into the valve body 24 is open an air bleed port 28, which is in communication with the fuel tank 22 (Fig. 1) through the air bleed pipe 23.

In the arrangement as described above, when a impulsive high pressure wave is propagated from the high pressure generating device 16 through fuel in the injection passage 15a, has reached the injector 14, high pressure energy is inducted inside the valve 24, causing the valve 40 to be pushed up against the spring 39, and the injection hole 41 to be opened for fuel injection. The impuslive high pressure wave is propagated to the communication hole 38, without attenuation, with the help of the conical configuration of the upper part of the seal member 91, and enters from the communication hole 38 into the cylindrical fuel passage chamber 24a. The impulsive high pressure wave collides with the wall of the fuel passage chamber 24a, effecting pressure rise in the upper part of the fuel passage chamber 24a. The second impulsive high pressure wave is propagated from this increased pressure section toward the injection hole 41 at the bottom of the fuel passage chamber 24a. The air bleed port 28 is provided in the side wall in the middle of the fuel passage chamber 24a, and energy of the second impulsive high pressure wave is never dissipated.

Figs. 6(A), (B) show yet another structural example of the injector of this invention. These embodiments are examples provided with drive means for opening/closing the valve. The injector 14 shown in Fig. 6(A) as in Fig. 2, is composed of an outwardly opening type valve 25, and provided with an electromagnetic solenoid 60 for driving the valve 25. In this arrangement, the electromagnetic solenoid is energized at a timing the impulsive high pressure wave reaches from the high pressure generating device 16, causing the valve 25 to be opened and fuel to be injected from the injection hole 41. As for the timing, the interval between the time when a drive voltage is applied to the high pressure generating source 17 of the high pressure generating device and the time when the high pressure wave reaches the injector 14, is determined, for example, by experiment, and the control circuit is arranged such that the solenoid 60 is energized at this timing.

In the arrangement as described above, energy of the high pressure wave is not consumed through valve opening, so that liquid fuel can be injected with even larger injection energy. The electromagnetic solenoid 60 is provided, in the circumference, with a longitudinal cutout providing communication between the upper and lower sides thereof, so that the impulsive high pressure wave can be propagated smoothly toward the injection hole 41. A longitudinal recess may be provided in the circumference of the electromagnetic solenoid 60 on the case body 24 side.

The injector 14 shown in Fig. 6(B), as in Fig. 5, is composed of an inwardly opening type valve 40, and provided with an electromagnetic solenoid 60 for driving the valve 40. Structures and functions of this electromagnetic solenoid 60 are similar to the embodiment in Fig. 6(A), and also in this embodiment, energy of the high pressure wave is not consumed through valve opening, so that liquid fuel can be injected with large injection energy. The communication hole 38 is inclined, which allows the impulsive high pressure wave to be inducted into the fuel passage chamber 24a with lowest possible attenuation. The electromagnetic solenoid 60 is provided, in the circumference at places facing the outlets of the communication holes 38 on the fuel passage chamber 24a side, with longitudinal cutouts providing communication between the upper and lower sides thereof, the number of the cutouts being in agreement with that of the communication holes 38. The air bleed port 28 is disposed on the injection hole 41 side from the electromagnetic solenoid 60, so that air can be removed even in the areas close to the injection hole 41.

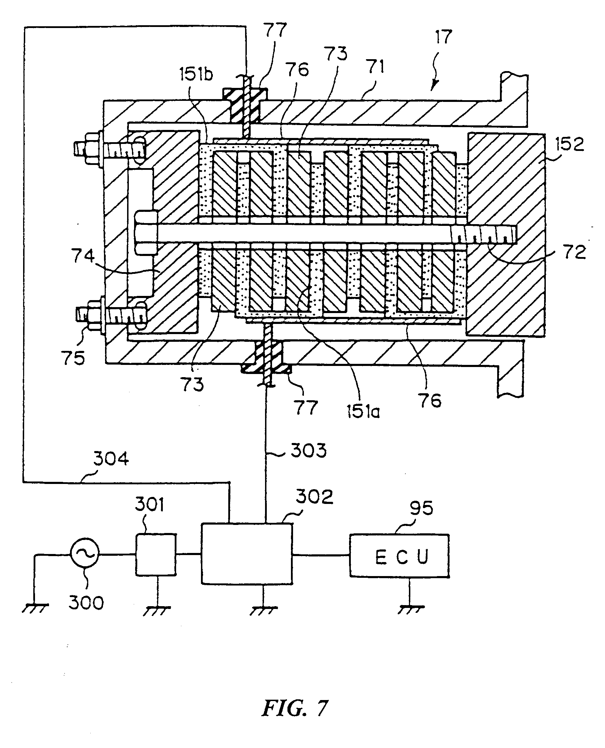

Fig. 7 is a detailed structural view of a high pressure generating source 17 utilizing a piezoelectric element. The high pressure generating source 17 is composed of a plurality of piezoelectric elements 73 provided in a sealed case 71, and between the piezoelectric elements 73, positive and negative electrodes 151a, 151b are disposed alternately. The piezoelectric elements 73, and positive and negative electrodes 151a, 151b are held in layers between a holder 74 and a plunger 152, and fastened together with a bolt 72. The piezoelectric elements 73 fastened together integrally with a bolt 72, are mounted to the sealed case 71 with screw members 75 through the holder 74. The positive electrodes 151a and the negative electrodes 151b are connected to their respective conductor plates 76, and further to a voltage regulator 302 through positive and negative charge supply wires 303, 304. To the outlets of the positive and negative charge supply wires 303, 304 are fitted sealing grommets 77, maintaining tightness of the casing. The voltage regulator 302 is connected to an ECU 95 to be controlled for driving as described later. Numeral 300 represents an AC power source, and numeral 301 an AC-DC converter circuit.

The piezoelectric element referred to herein is a known piezoelectric actuator composed of elements with what is called piezoelectric effect. Materials with piezoelectric effect includes various substances from quartz to polymeric material, but titanate zirconate lead (PZT), a type of piezoelectric ceramics, is typical for the material of a piezoelectric actuator.

As shown in Fig. 7, an electrostrictive element is formed by a plurality (seven sheets in this example) of piezoelectric elements (piezoelectric ceramics) 73, and positive and negative electrodes 151a, 151b disposed so as to hold these elements in between in integrated relation. An AC current from the AC power source is converted to a DC voltage through an AC-DC converter circuit 301 to be inputted to the voltage regulator 302.

The voltage regulator 302 is arranged such that out of the two outputs controlled by the ECU 95 and connected by respective positive and negative charge supply wires 303, 304, the output on the positive charge supply wire 303 side is regulated to a given positive voltage, while the output on the negative charge supply wire 304 side is grounded. When lowering the voltage of the positive electrode 151a, a part of charge of the positive electrode 151a is grounded. Piezoelectric ceramics between the positive and negative electrodes 151a, 151b changes its shape in the direction of thickness in proportion to the intensity of the electric field produced by the two electrodes. The changes in shape (seven changes in this figure) are accumulated to become a large displacement.

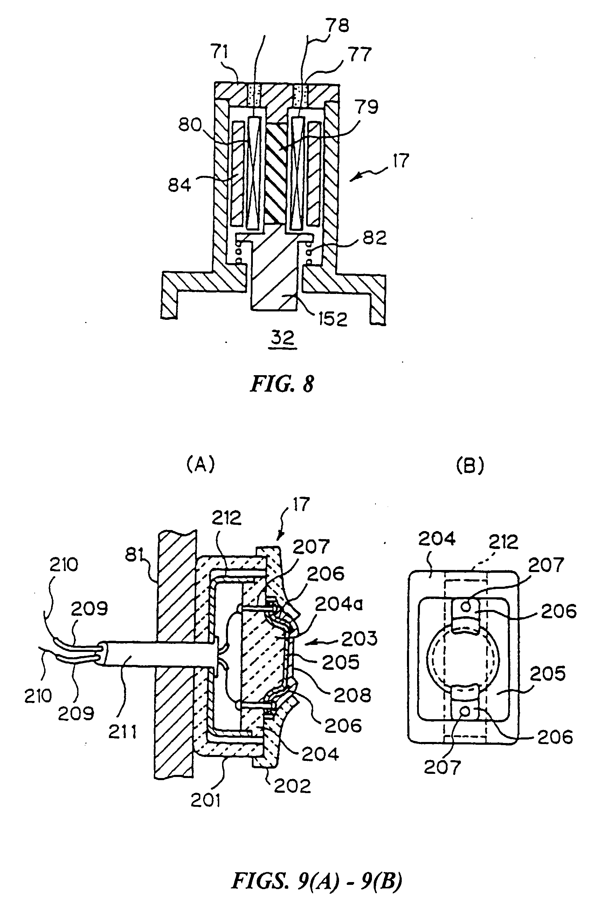

Fig. 8 is a structural view of another embodiment of the high pressure generating source 17. In this embodiment, a magnetostrictive element is utilized instead of the foregoing electrostrictive element. The magnetostrictive element is composed of a magnetic coil made of a magnetroelectric material capable of expanding and shrinking in the magnetic field, such as ternary alloy of terbium, dysprosium, and lead, and a coil wound around the magnetic core. The magnetic core is adapted to expand and shrink by controlling the amount of energization (e.g. voltage or current).

As shown in Fig. 8, around a magnetostrictive element 79 is wound a coil 80, around which is fitted a permanent magnet 84. At the end of the magnetostrictive element 79 is fixed a plunger 152. The plunger 152 is biased by a spring 82 in a direction of retraction from the pressure chamber 32. The coil 80 is connected to the voltage regulator through lead wires 78. The voltage regulator, as in the foregoing embodiment, is connected to the ECU, and adapted to control the drive current to the coil 80 and to regulate the voltage applied to the magnetostrictive element 79. An increased voltage to the coil 80 increases the drive current in the coil and also the intensity of the magnetic field, and thus the voltage applied to the magnetostrictive element 79 is increased, generating a large impulsive high pressure wave. Other structures and functions are similar to the foregoing embodiment utilizing the electrostrictive element. As for driving of this magnetostrictive element 79, a current regulator may be disposed in place of the voltage regulator to apply to the coil 80 electric power of a constant voltage, but with a large and stepped current. In addition, one end of the magnetostrictive element 79 may be fixed to the end plate of the sealed case 71 with bolts, in place of a spring 82.

Figs. 9 are structural views of yet another embodiment of the high pressure generating device according to this invention. In this embodiment, an electrical radiator (heating element) is employed as a high pressure generating source 17. Fig.9(A) is a sectional view of the heating element, and Fig. 9(B) is a front view of a heating unit 203 before coating of a cover film 208, with a plate 212 fitted temporarily (corresponding to Fig. 9(A) but viewed from the right side).

The heat generating unit 203 is arranged as follows.

On a glass plate 204 formed with a raised portion 204a at the center on one side, is printed a resistor 205 so as to cover the raised portion 204a, and then sintered. Also, conductive material is printed on the 204a at both sides in the vertical direction as seen in this figure, in such a manner as to cover the resistor 205, and then sintered to form two electrodes 206. Pins 207 made of copper or copper alloy are provided passing through the glass body 204, resistor 205 and electrodes 206, and calked at both ends. Then, on the glass body 204 formed with the resister 205 and electrodes 206 is further coated a non-electrically conductive but thermally conductive cover film 208 in such a manner as to cover the resistor 205 including the electrodes 206 and pins 207. After the plate 212 supporting the end of a cord 211 containing lead wires 210, is fixed to the glass plate 204, the ends of the lead wires 210 are soldered to the ends of the pins 207, respectively. In this way is formed the heat generating unit 203. The heat generating unit 203 is enclosed liquid-tightly in the case body 201 and case lid 202 made of a ceramic of low thermal conductivity, to form the high pressure generating source 17. Numeral 81 is a support plate, with which the high pressure generating source 17 is fixed so as to face the pressure chamber of the foregoing high pressure generating device.

The case lid 202 is provided with a window at the center, and the cover film 208 comes into direct contact with fuel. When a DC or an AC current is supplied to the lead wires 210, heat is generated in a portion of the resistor 205 between the two electrodes 206, and fuel is vaporized to produce bubbles on the cover film 208. This bubbles, as described above, cause the liquid particles in the pressure chamber to be pressed, effecting an impulsive high pressure. Functions of the liquid injection due to propagation of the impulive high pressure wave are just as described in the foregoing embodiment.
0064]

The thickness of the films of the resistor 205 and electrodes 206 is a few µm, and the cover film 208 has a thickness of 0.2-2mm.

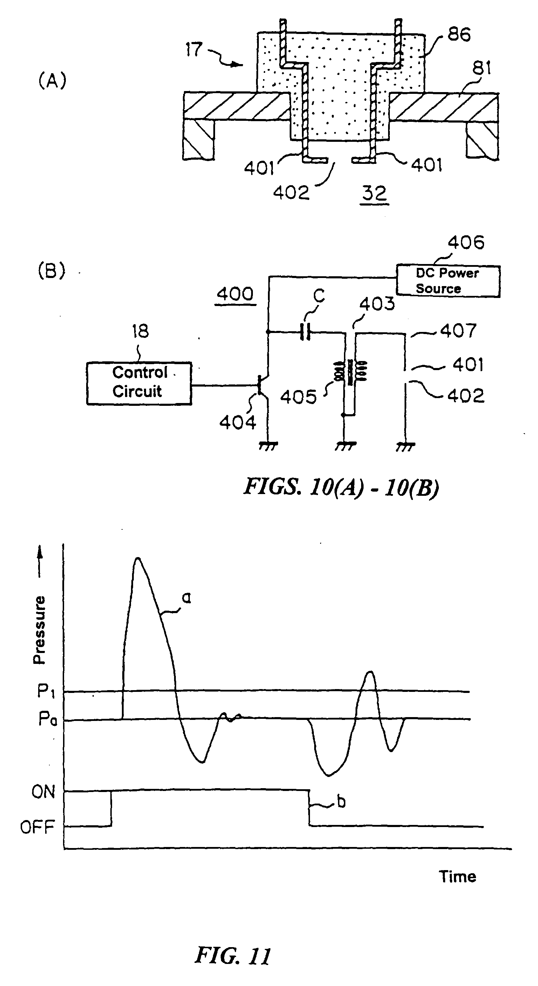

Figs. 10 show yet another example of the high pressure generating source 17 according to this invention. Fig. 10(A) is a sectional structural view of a portion, and Fig. 10(B) is a drive circuit diagram of Fig. 10(A). A pair of opposed discharge electrodes 401 held by an insulator 86 are provided facing the pressure chamber 32 filled with fuel. Between the discharge electrodes 401 is formed a discharge gap 402 of a given distance. A fuel feed circuit 400, as shown in Fig. 10(B), is arranged such that a capacitor C composed of two electrode plates is provided; in the middle of a coupled circuit 403 coupling both electrode plates, an electronic switch 404 and the primary side of a booster coil 405 are disposed in series; in the middle of the coupled circuit 403, one electrode plate including a electrode plate of the capacitor C, and the middle section of the electronic switch 404, are connected to a DC power source 406; and said discharge gap 402 is formed in the middle of the second coupled circuit 407 connecting both ends of the secondary side of the booster coil 405.

The electronic switch 404 operates through a fuel supply control signal of the control unit 18. When electric energy corresponding to a required fuel supply, is applied to the electrodes of the capacitor C, and the electronic switch 404 is turned on through a fuel supply control signal of the control unit 18, then both sides of the capacitor C conduct electricity through the electronic switch, ground, primary side of the booster coil 405. This discharging in the capacitor C causes generation of high voltage in the secondary side of the booster coil 405, and another discharge between the discharge gap 402 in the pressure chamber 32. The heat caused by the discharge vaporizes fuel instantaneously, which produces bubbles. This bubbles, as described above, cause the liquid particles in the pressure chamber to be pressed, effecting an impulsive high pressure. Functions of the liquid injection due to propagation of the impulsive high pressure wave are just as described in the foregoing embodiment.

In the embodiment in Figs. 10 as described above, if the magnitude of discharging power at the discharge gap 402 within a given time is increased, the amount of fuel delivery will increase. The discharging power at the discharge gap 402 has a positive correlation with the discharging power in the capacitor C. The discharging power at the discharge gap 402, if the voltage of the DC power source 406 is constant, is controlled by the number of cycles of charging and discharging in the capacitor C within a given time. This frequency of charging and discharging in the capacitor C is determined by the frequency of on-off switching of the electronic switch 404, and a larger frequency of charging and discharging in the capacitor C will increase the total discharging power, thus effecting increased fuel supply. For a larger engine load, the frequency of charging and discharging in the capacitor C is increased by means of the control unit 18.

As still another example of the high pressure generating device in which generation of bubbles in liquid fuel by heat energy causes generation of impulsive high pressure which is propagated to the injection hole for fuel injection, a high pressure generating source utilizing a laser beam may be employed. In this case, when a laser beam is applied to liquid fuel in the pressure chamber, the laser beam vibrates the fuel particles to thereby convert the light energy easily to heat energy, as described above. This causes the liquid to be vaporized and expanded instantaneously. The expanding liquid vapor (bubble) pushes fuel particles in front. At this instant, the fuel particles tend to stay in the place by inertia, so that a large impulsive high pressure wave is generated.

Fig. 11 is a diagram showing the relation between the impulsive high pressure generated in a high pressure generating device of this invention, and its drive signal. Line (a) shows a pressure wave and Line (b) a drive signal. In Line (a), P1 represent a pressure of valve opening of the injector with an outwardly opening or inwardly opening valve, and P0 represents a pressure in the pressure chamber before pressurization. As shown in the figure, a high pressure much higher than the valve opening pressure is generated impulsively immediately after the drive signal is switched on, and then attenuated rapidly. The embodiments described above are examples in which propagation of the impulsive high pressure just after drive signal input, is made effective use in the liquid. Also, as shown in the figure, just after the drive signal is switched off, the pressure wave goes down for a time and then rise up again due to its reaction, generating a pressure wave exceeding the valve opening pressure P1. Such a peek pressure at the time of switching off of the drive signal may be utilized, for fuel injection, as an impulsive pressure to the injection hole, as the pressure at the time of switching on of the drive signal.

In the case of utilizing an electrostrictive element as a high pressure generating device, as shown in Fig. 7, the drive signal is a pulse pressure signal with a voltage larger than a given value, and in the case of a magnetostrictive element shown in Fig. 8, the drive signal is a pulse current signal with a current larger than a given value, or a pulse voltage signal with a voltage larger than a given value. In the case of utilizing the elements shown in Figs. 9 and Figs. 10, or a laser beam, the drive signal is a pulse power signal with an electric power over a given value, and the pulse width is set narrower than that of the electrostrictive element. This is because a large impulsive high pressure is generated the instant bubbles are produced and expanded, and because the impulsive high pressure is rather prevented from being generated when bubbles are produced continuously in a state of boiling. Adjustment of the injection flow rate is possible by changing the peek pulse value (maximum voltage, maximum current, or maximum power) or the number of pulses.
[0071]

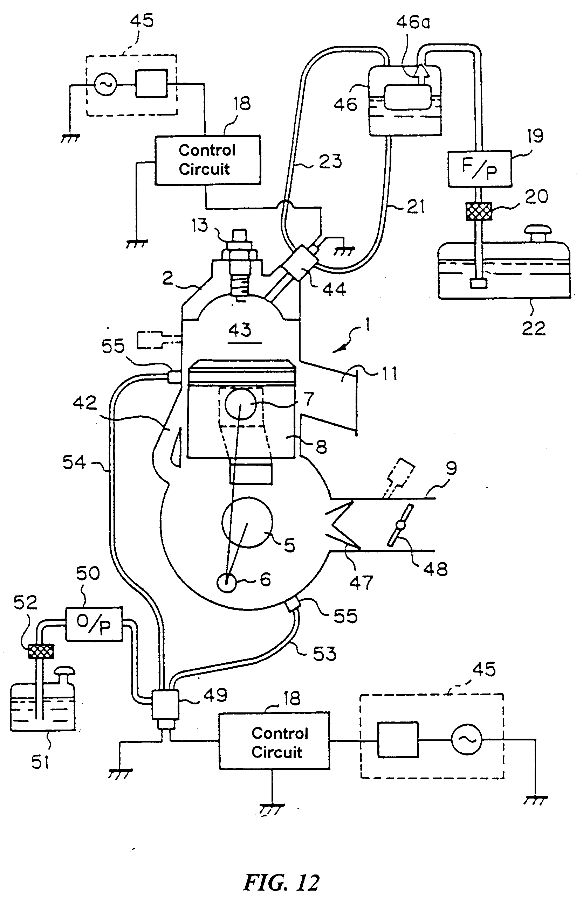

Fig. 12 shows an example of a two-stroke internal combustion engine incorporating a liquid injection apparatus according to this invention. An engine 1, as in Fig. 1 shown above, has a piston 8 reciprocating in the cylinder, and provided with an intake pipe 9 in communication with the crank chamber, and an exhaust pipe 11 in communication with a combustion chamber 43 in the cylinder. The crank chamber and the combustion chamber 43 are connected to each other by a scavenging pipe 42. In the intake pipe 9 are provided a throttle valve 48 and a reed valve 47. To a cylinder head 2 is mounted a high pressure fuel injection apparatus 44 facing the combustion chamber 43. The high pressure fuel injection apparatus 44 is composed integrally of the high pressure generating device 16 and the injector 14 shown in the foregoing embodiment, and adapted to inject fuel by using the impulsive high pressure wave, as described in the foregoing embodiment.
[0072]

The high pressure fuel injection apparatus 44 is in communication, through a fuel feed pipe 21, with a gas-liquid separating float chamber 46 disposed upwardly of the injection apparatus 44 and provided with a breather hole (not shown) at the top. The gas-liquid separating float chamber 46 is in communication with a fuel tank 22 through a float type valve 46a for a constant liquid level, a fuel pump 19, and a filter 20. The high pressure fuel injection apparatus 44, as in the foregoing embodiment, is connected to a control circuit 18, and further to a power circuit 45 composed of an AC power source and an AC-DC converter circuit. The high pressure fuel injection apparatus 44, as shown in a single dot and dash line in the figure, may be mounted to the side wall of the cylinder block or the intake pipe 9.

In this arrangement, bubbles in the pressure chamber, injection passage, valve means (not shown) in the high pressure fuel injection apparatus 44, will enter to an air bleed pipe 23 during stoppage of the engine 1, and move toward the float chamber 46 by buoyancy. The reason why bubbles enter the pressure chamber is that the pressure chamber is located above the injection passage. Also, the reason why bubbles enter from the pressure chamber into the air bleed pipe is that the opening of the air bleed pipe 23 on the pressure chamber side is located above the pressure chamber. If the pressure chamber side opening of the air bleed pipe 23 is located above the induction port (not shown) at the end of the fuel feed pipe 21, bubbles can be inducted reliably into the air bleed pipe 23. On the other hand, bubbles in the fuel feed pipe 21 will move into the float chamber 46 by buoyancy during stoppage of the engine 1.

During engine 1 running, the high pressure fuel injection apparatus 44 is operated, and the following two movements will happen alternately and successively: injection due to generation of the impulsive high pressure wave, and fuel transfer into the pressure chamber due to negative pressure produced in the pressure chamber by injection and positive pressure caused by the fuel level in the float chamber 46. If bubbles are present in the air bleed pipe 23 on the pressure chamber side during fuel transfer to the pressure chamber, the bubble will return back to the pressure chamber. Therefore, if a check valve which allows only the flow toward the float chamber 46 is provided in the air bleed pipe 23, air bleed can be performed reliably even during engine 1 running. Since the impulsive high pressure wave has a strong directivity to the direction normal to the generating surface, the amount of fuel pushed out into the air bleed pipe (fuel leakage) during fuel injection is very small. The function of this small fuel leakage and the action of the check valve will cause the bubbles in the air bleed pipe 23 to be transferred and separated reliably to the float chamber.

Although the amount of the pushed out fuel (fuel leakage) into the fuel feed pipe 21 during fuel injection is very small, if a check valve which allows only the flow toward the pressure chamber is provided in the fuel feed pipe 21, the amount of injection leakage will be small.

The engine of this embodiment also incorporates a high pressure generating device of this invention to feed lubricating oil. Numeral 49 represents the high pressure lubricating oil feed device, and the high pressure generating device 16 described in the foregoing embodiment is employed. Lubricating oil is transferred from the oil feed device 49, through oil pipe 53, 54, to an injector 55, and injected into the crank chamber and cylinder by the injector 55. To the oil feed device 49 is supplied lubricating oil by an oil pump 50 from an oil tank 51 through a strainer 52. The oil feed device 49, as in the foregoing embodiment, has a high pressure generating source and adapted to inject lubricating oil from the injector 55 through a impulsive high pressure; structures, principles of generation of the impulsive high pressure wave and its functions, and the action of injection, are just as in the previous embodiments. In the pressure chamber at places facing one impulsive high pressure generating section, are provided a plurality of lubricating oil delivery ports in communication with oil feed pipes 53, 54.

Also in this high pressure lubricating oil feed device, if the above-described air bleed means is provided, easier air bleed can be effected.

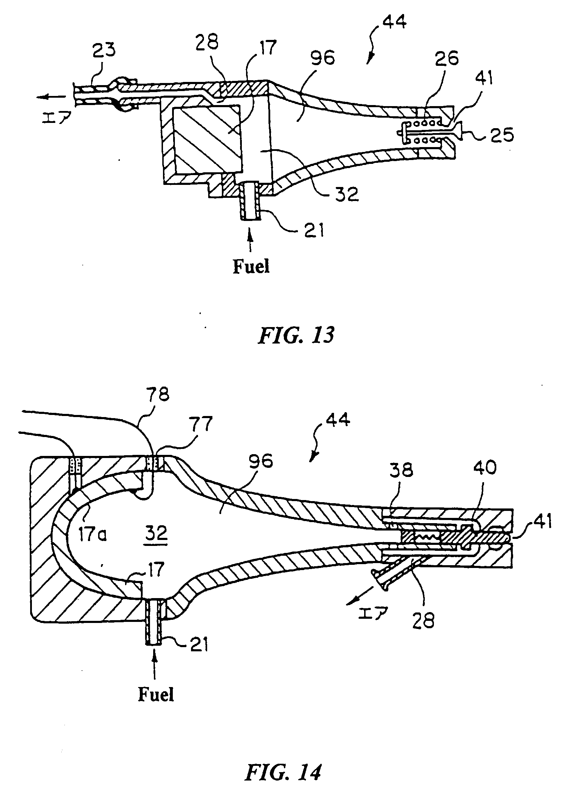

Fig. 13 shows a structural example of the high pressure fuel injection apparatus 44 incorporated in the engine of Fig. 12. The fuel injection apparatus 44 is composed integrally of a high pressure generating device and an injector, and as shown in the figure, provided with an injection hole 41 just behind the pressure chamber 32 through an injection passage 96 with reduced diameter, rather than a fuel pipe. In the pressure chamber 32 at the upper side of the high pressure generating source 17 is provided an air bleed port 28, to which is connected an air bleed pipe 23. In the injection hole 41 is fitted an outwardly opening valve 25 through a spring 26. Structures and functions of the high pressure generating source 17, functions of pressure rise and high pressure wave propagation in the injection passage 96, action of fuel injection, as well as air bleed functions, are the same as in the preceding embodiment.

Fig. 14 is a structural view of another example of the fuel injection apparatus 44 with a high pressure generating device integrated with an injector. The high pressure generating source 17 is composed of an piezoelectric element with a high pressure wave applying surface 17a in the shape of a concave, facing the pressure chamber 32. Just behind the pressure chamber 32 is formed an injection passage 96 with reduced diameter, the end of which is fitted an inwardly opening valve 40. The focus function of the high pressure wave applying surface 17a, structures and functions of the high pressure generating source 17, functions of pressure rise and high pressure wave propagation in the injection passage 96, action of fuel injection, as well as air bleed functions, are the same as in the preceding embodiment.

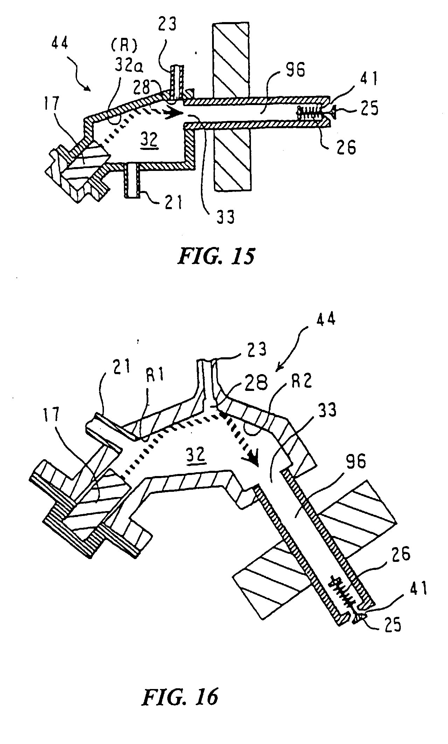

Fig. 15 shows yet another structural example of the high pressure fuel injection apparatus 44 incorporated in the engine of Fig. 12. The fuel injection apparatus 44, as in Fig. 13 and Fig. 14, is composed integrally of a high pressure generating device and an injection valve. As shown in the figure, the injection hole 41 is provided in the pressure chamber 32 with a high pressure generating source 17, through an injection passage 96 just behind the pressure chamber 32 having an inside surface 32a as a reflection surface R. In the injection hole 41 is fitted an outwardly opening valve 25 through a spring 26. The relative positioning of the high pressure generating source 17 and the delivery port 33 is determined according to the position or the angle of the reflection surface R. In this example, one reflection surface is provided and thus the high pressure wave is reflected once and then inducted to the delivery port 33.
At the upper part of the pressure chamber 32 is formed an air bleed port 28, from which air in the pressure chamber is discharged effectively.

Structures and functions of the high pressure generating source 17, functions of high pressure wave propagation in the injection passage 96, action of fuel injection, as well as air bleed functions, are the same as in the preceding embodiment.

Fig. 16 is a structural view of yet another example of the fuel injection apparatus 44 with a high pressure generating device integrated with an injection valve. In this example, two reflection surfaces R1, R2 are formed on the inside wall of the pressure chamber 32, causing the impulsive high pressure wave to be reflected two times successively, to be inducted into the delivery port 33, and further to be propagated to the injection hole 41 through the injection passage 96. Structures and functions of the high pressure generating source 17, functions of high pressure wave propagation in the injection passage 96, action of fuel injection, as well as air bleed functions, are the same as in the preceding embodiment.

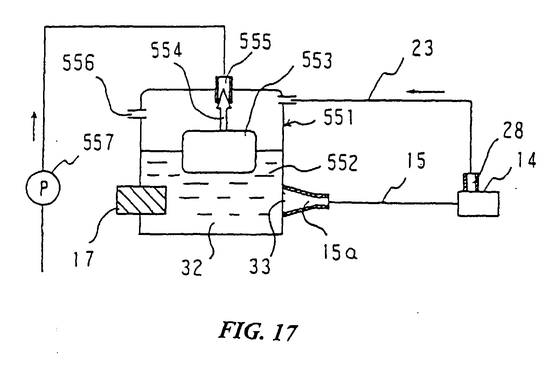

Fig. 17 is a structural view of still another embodiment of this invention. In this embodiment, the high pressure generating device is composed of a float chamber 551, inside which is formed a pressure chamber 32, where fuel 552 is held to a given level. Numeral 553 represents a float, which is provided with a needle valve 554 for opening/closing a fuel port 555 according to the height of the float 553. In the float chamber 551 and upwardly of the liquid level is open an air bleed hole 556. To the fuel port 555 is supplied fuel from a fuel tank (not shown) by a pump 557. In the pressure chamber 32, or a fuel holding section of the float chamber 551, is provided a high pressure generating source 17 similar to that of the previous embodiments, and a delivery port 33 is open in the opposite wall. The delivery port 33, as in the previous embodiments, is in communication with an injector 14 through a injection passage 15a. Into the injector 14 is open an air bleed port 28, which is connected, through an air bleed pipe 23, to the float chamber 551 constituting the pressure chamber 32. In this embodiment, the pressure chamber 32 (float chamber 551) itself constitutes gas-liquid separating means and thus air bleed means in the injection fuel system. In this way, it is feasible to form a high pressure generating device by incorporating a high pressure generating source 17, for example, into the float chamber 45, shown in Fig. 12, provided in a fuel feed system. Therefore, no separate sealed pressure chamber is necessary, simplifying the structure. Other structures, and functions of high pressure wave propagation, and air bleed functions, are the same as in the previous embodiments.

### [Effect of the Invention]

According to the invention described above, in a liquid injection apparatus having a high pressure pump of a piston type or the one utilizing a impulsive high pressure wave, air bleed is performed in the injection fuel system reliably, so that pressure rise during injection can be ensured, or the propagation route of the high pressure wave is filled exclusively with non-compressive liquid, so that energy loss due to compressive air can be avoided in the traveling impulsive high pressure wave.

Therefore, a high pressure wave generated, for example, by an energized piezoelectric element, can be propagated in a injection passage as a high pressure wave without attenuation, energy loss being kept small on the way, and the energy of the high pressure wave which has reached the injection hole can be converted effectively to the kinetic energy of the liquid in the injection hole to inject the liquid from the injection hole. In this case, energy loss is small during propagation in the injection passage, so that the amount of injection can be increased. Also, the high pressure wave reaches the injection hole without attenuation, so that injection pressure is increased, as well as injection speed.

When such a liquid injection apparatus is employed, for example, as ink injection means of a printing apparatus, ink injection makes use of impulsive high pressure, so that injection speed can be increased, as well as printing speed. Further, valve means is provided near the injection hole, so that ink supply can be controlled properly, preventing blurred printing. Furthermore, if a surface to be printed is placed at a large distance from the injection hole, atomization of the ink particles is accelerated because of high injection speed, effecting even printing in wide areas. In addition, if an article to be printed is moved perpendicular to the direction of injection while controlling the distance between the injection hole and the surface to be printed, printing process can be performed without unevenness or the blur.

When this invention is applied to fuel injection means of a boiler, fuel is injected through impulsive high pressure, so that fuel injection speed is increased, effecting sufficient fuel atomization. Therefore, even a fuel of low volatility such as a heavy oil can be burned reliably, effecting a higher thermal efficiency with a smaller amount of soot.

Also, when this invention is applied to lubricating oil feed means of an internal combustion engine, oil is injected through impulsive high pressure, so that stable and reliable lubricating can be performed, effecting smooth engine operation.

Further, when this invention is applied to a fuel injection apparatus of an internal combustion engine, fuel is injected through impulsive high pressure, so that it can be injected even when the combustion chamber is at a high pressure. Therefore, fuel can be injected for a gasoline engine till the time just before ignition at the end of the compression stroke, and for a diesel engine, fuel can be injected into the combustion chamber at a high pressure during combustion. In this case, fuel injection speed is increased, so that fuel particles are atomized so as to be vaporized reliably, thereby preventing the unburnt component from generating and improving purification of the exhaust gas.

In such an internal combustion engine, fuel is injected through impulsive high pressure, so that fuel injection speed is increased and atomization of fuel particles is accelerated, effecting reliable fuel supply to the combustion chamber at a high pressure. Therefore, a reliable and general purpose fuel injection apparatus can be achieved which is available not only for an intake pipe injection or in-cylinder injection in two-stroke and four-stroke gasoline engines, but also for diesel engines, and in which reliable fuel injection can be effected in all the operating conditions with high combustion efficiency, and generation of unburnt gas is restricted, thereby enhancing the quality of exhaust emissions.

## Claims

1. Liquid injection device comprising a high pressure generating device (16) and an associated injector (14), **characterized by** an air bleed port (28) for removing gaseous fluid present in said liquid to be injected

2. Liquid injection device according to claim 1, **characterized in that** said high pressure generating device (16) comprising a pressure chamber (32) in fluid communication with a liquid supply source (22), a low pressure pump (19) between said liquid supply source (22) and said pressure chamber (32) and an impulsive high pressure generating source (17) acting on liquid present in said pressure chamber (32) by providing an impulsive pressure to said liquid.

3. Liquid injection device according to claim 1 or 2 **characterized in that** said high pressure generating device (16) is directly connected to said injector (14), via an injection passage (96), or via a liquid pipe (15).

4. Liquid injection device according to at least one of the preceding claims 1 to 3, **characterized in that** said air bleed port (28) is provided in said high pressure generating device (16), in a liquid pipe (15) between said high pressure generating device (16) and said injector (14), or in said injector (14).

5. Liquid injection device according to at least one of the preceding claims 1 to 4, **characterized in that** said injector (14) comprising a valve (25) operable by the pressure generated by said high pressure generating device (16) or by a drive means (60) adapted to open and close said valve (25) in response to the operation of said high pressure generating device (16).

6. Liquid injection device according to at least one of the preceding claims 2 to 5, **characterized in that** opposite to said impulsive high pressure generating source (17) there is provided a high pressure delivery port (33) leading to said injector (14), or at least one reflection surface (R) for reflecting a high pressure wave generated by said impulsive high pressure generating source (17) and directing to said high pressure delivery port (33).

7. Liquid injection device according to at least one of the preceding claims 2 to 6, **characterized in that** said air bleed port (28) is connected with said liquid supply source (22) via an air bleed pipe (23).

8. Liquid injection device according to at least one of the preceding claims 2 to 7, **characterized in that** the impulsive high pressure generating source (17) is an electrostrictive element capable of changing its shape in response to changes in intensity of the electric field.

9. Liquid injection device according to at least one of the preceding claims 2 to 7, **characterized in that** an impulsive high pressure generating source (17) is a magnetostrictive element capable of changing its shape in response to changes in intensity of the magnetic field.

10. Liquid injection device according to at least one of the preceding claims 2 to 7, **characterized in that** said impulsive high pressure generating source (17) is a heating element comprising a resistor (205), discharge electrodes (401) or a laser beam generator for vaporizing liquid adjacent said heating element thereby generating a high pressure wave.

11. Liquid injection device according to at least one of the preceding claims 1 to 10, **characterized in that** said liquid injection device is a fuel injection device of an internal combustion engine (1) for directly injecting fuel into an intake system (9, 10) or a combustion chamber, or a lubricant feeding means of an internal combustion engine (1), in particular for feeding and injecting lubricating oil, or an ink injection means of a printing device for supplying and injecting ink to articles to be printed.
